# EUROPEAN PATENT APPLICATION

(11) **EP 4 727 118 A1**
(43) Date of publication of application: **15.04.2026**
(21) Application number: 24205718.0
(22) Date of filing: 10.10.2024
(51) Int. Cl.: H04N 19/115, H04N 19/137, H04N 19/124, H04N 19/176, H04N 19/51

(54) **MOTION BASED ENCODING OF PIXEL BLOCKS**

(71) Applicant: Axis AB, 223 69 Lund (SE)
(72) Inventor: Pettersson, Mattias, 223 69 Lund (SE); Antonsson, Jakob, 223 69 Lund (SE)
(74) Representative: AWA Sweden AB

(57) **Abstract**

There is provided techniques for encoding pixel blocks (220a) of a video sequence (200). A method is performed by an image processing device (110, 900). The method comprises obtaining (S102) video sequence (200) composed of a sequence of image frames (210a, 210b). The method for each of the image frames (210a, 210b) further comprises calculating (S104) statistics per pixel block (220a). The method for each of the image frames (210a, 210b) further comprises categorizing (S106) the pixel block (220a) into three different motion categories based on their statistics. The method for each of the image frames (210a, 210b) further comprises encoding (S108) each of the pixel blocks (220a) with a compression rate that depends on which motion category each of the pixel blocks (220a) belongs.

## Description

### TECHNICAL FIELD

Embodiments presented herein relate to a method, an image processing device, a computer program, and a computer program product for encoding pixel blocks of a video sequence.

### BACKGROUND

In video applications that involve storage of a large amount of video content, the available memory capacity usually imposes limitations on how much video data may be stored. In such case, it is useful to identify, and prioritize storing of, video content of relatively higher importance. In general terms, to improve video encoding capability, one challenge is to increase compression efficiency while preserving the original video quality.

For example, different types of intelligent algorithms have been developed to ensure that relevant forensic information is identified, recorded, and sent in full resolution and at full frame rate. Such algorithms can be based on dynamic region of interest (ROI) detection, dynamic group of pictures (GOP) usage, and dynamic frame per second (FPS) adaptation that work together in real-time to preserve faces, tattoos, license plate numbers, and more. In this way, both high resolution and a high frame rate can be preserved whilst reducing the total bit rate, yielding prolonged retention time, and low storage requirements.

However, there could be scenarios that are challenging for the above-disclosed intelligent algorithms. This could lead to unimportant information being encoded with high quality, thus wasting valuable storage space and decreasing the retention time.

One alternative is therefore to prune the video data such that only important information is kept. In US20170039729 A1 is disclosed a method and corresponding apparatus for pruning video data, comprising detecting motion areas within video frames of video data based on short-term and long-term variations associated with content of the video data. Motion events associated with the content of the video data are identified based on the motion areas detected, corresponding filtered motion areas, and variation patterns associated with the video data. Storage periods for the video frames of the video data are then determined based on the motion events identified. The video frames are stored according to the determined storage periods. The filtered motion areas are also identified. For example, the filtered areas are associated with repetitive motion. As such, sub-areas within the already identified motion areas and associated with repetitive motion are identified. The sub-areas associated with repetitive motion are then excluded from already identified motion areas resulting in filtered motion areas.

However, in some scenarios it may still be challenging to correctly identify areas representing unimportant information, leading to failure when using one or more of the above-disclosed intelligent algorithms. Hence, there is still a need for content-aware video coding.

### SUMMARY

An object of embodiments herein is to address the above issues in terms of incorrect, or at least inefficient, identification of areas representing unimportant information.

A particular object is to provide methods, devices, and computer programs that lowers the risk of failure when using one or more of the above-disclosed intelligent algorithms.

According to a first aspect there is presented a method for encoding pixel blocks of a video sequence. The method is performed by an image processing device. The method comprises obtaining a video sequence composed of a sequence of image frames. Each of the image frames is composed of pixels blocks. The method for each of the image frames further comprises calculating statistics per pixel block. The statistics pertain to amount of motion per pixel block over time. The amount of motion is calculated based on a block difference determined per pixel block over time. The method for each of the image frames further comprises categorizing the pixel block into three different motion categories based on their statistics. The method for each of the image frames further comprises encoding each of the pixel blocks with a compression rate that depends on which motion category each of the pixel blocks belongs. At least the pixel blocks in the motion category representing highest amount of motion per pixel block over time are encoded with highest compression rate.

According to a second aspect there is presented an image processing device for encoding pixel blocks of a video sequence. The image processing device comprises processing circuitry. The processing circuitry is configured to cause the image processing device to obtain a video sequence composed of a sequence of image frames. Each of the image frames is composed of pixels blocks. The processing circuitry is configured to cause the image processing device to, for each of the image frames, calculate statistics per pixel block. The statistics pertain to amount of motion per pixel block over time. The amount of motion is calculated based on a block difference determined per pixel block over time. The processing circuitry is configured to cause the image processing device to, for each of the image frames, categorize the pixel block into three different motion categories based on their statistics. The processing circuitry is configured to cause the image processing device to, for each of the image frames, encode each of the pixel blocks with a compression rate that depends on which motion category each of the pixel blocks belongs. At least the pixel blocks in the motion category representing highest amount of motion per pixel block over time are encoded with highest compression rate.

According to a third aspect there is presented a computer program for encoding pixel blocks of a video sequence. The computer program comprises computer code which, when run on processing circuitry of an image processing device, causes the image processing device to perform actions. One action comprises the image processing device to obtain a video sequence composed of a sequence of image frames. Each of the image frames is composed of pixels blocks. The processing circuitry is configured to cause the image processing device to, for each of the image frames, calculate statistics per pixel block. The statistics pertain to amount of motion per pixel block over time. The amount of motion is calculated based on a block difference determined per pixel block over time. One action comprises the image processing device to, for each of the image frames, categorize the pixel block into three different motion categories based on their statistics. One action comprises the image processing device to, for each of the image frames, encode each of the pixel blocks with a compression rate that depends on which motion category each of the pixel blocks belongs. At least the pixel blocks in the motion category representing highest amount of motion per pixel block over time are encoded with highest compression rate.

According to a fourth aspect there is presented a computer program product comprising a computer program according to the third aspect and a computer readable storage medium on which the computer program is stored. The computer readable storage medium could be a non-transitory computer readable storage medium.

Advantageously, these aspects enable image blocks associated with high (repetitive) motion to be suppressed (by being subjected to encoding with a high compression rate) whilst other pixel blocks can be encoded as usual, thus preserving details or finer motion.

Advantageously, these aspects enable the total bit rate for encoding the video sequence to be low by using a low compression rate (i.e., keeping a high quality) only for the pixel blocks of interest.

Advantageously, these aspects enable pixel blocks of the image frame which are noisy to be compressed with a high compression rate in scenarios where the noise leads to large variations in the block statistics.

If the video sequence has a cap in bitrate (i.e., the video sequence has a maximum bitrate limit), then pixel blocks with high motion may cause the bitrate to exceed the maximum bitrate limit. This could cause all of the image to suffer from higher compression and/or frame drops, resulting in a poor video. Advantageously, by using the herein disclosed embodiments, this situation can be avoided by using a high compression rate for suppressing those pixel blocks, and thereby enabling the bitrate to stay below the maximum bitrate limit.

Whereas the aforementioned document US20170039729 A1 is concerned with identifying filtered motion associated with repetitive motion, the herein disclosed embodiments are concerned with areas that have pixels that are changing repeatedly.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating an image processing device according to embodiments;
Fig. 2 schematically illustrates image frames of a video sequence according to embodiments;
Fig. 3 is a flowchart of methods according to embodiments;
Fig. 4 is a flowchart of methods according to embodiments;
Fig. 5 is a block diagram of an image processing device according to embodiments;
Fig. 6 schematically illustrates an example of a scene representing a vehicle interior according to embodiments;
Fig. 7 schematically illustrates an example of a scene representing a body camera view according to embodiments;
Fig. 8 illustrates a comparison between different alternatives for compression rate selection according to embodiments;
Fig. 9 is a schematic diagram showing structural units of an image processing device according to an embodiment; and
Fig. 10 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The embodiments disclosed herein relate to techniques for encoding pixel blocks of a video sequence. In order to obtain such techniques, there is provided an image processing device, a method performed by the image processing device, a computer program product comprising code, for example in the form of a computer program, that when run on an image processing device, causes the image processing device 110 to perform the method.

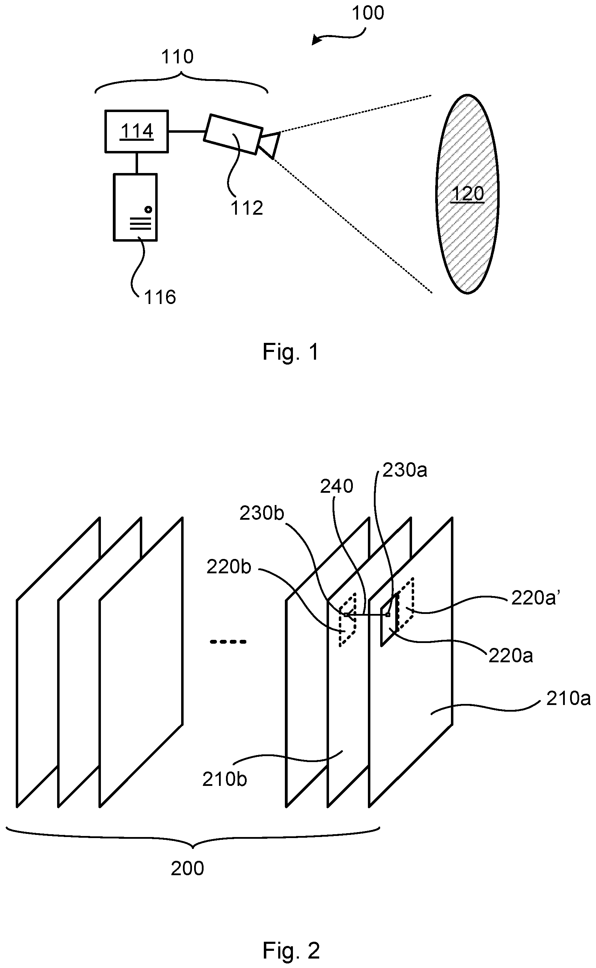

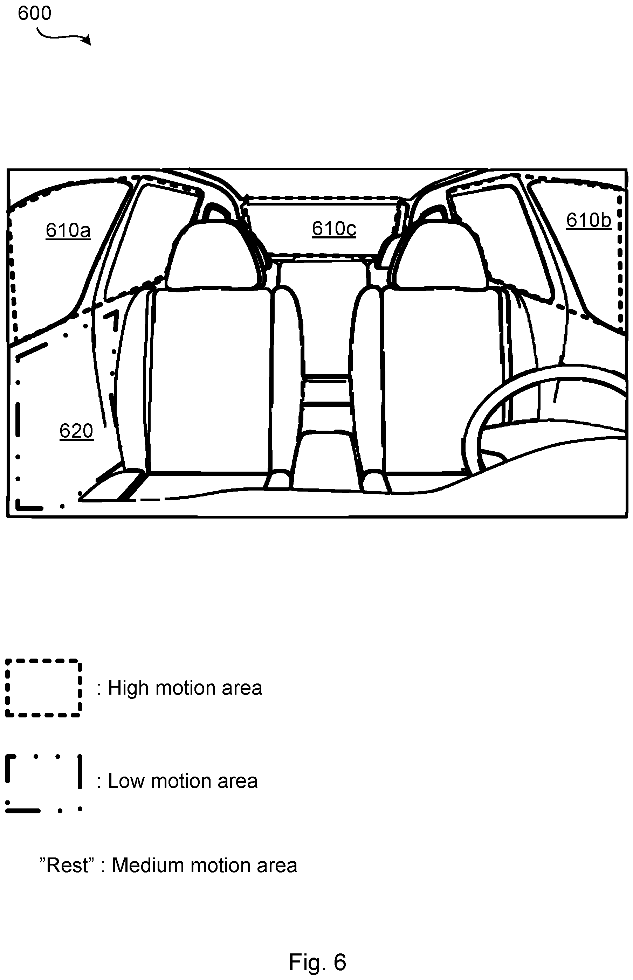

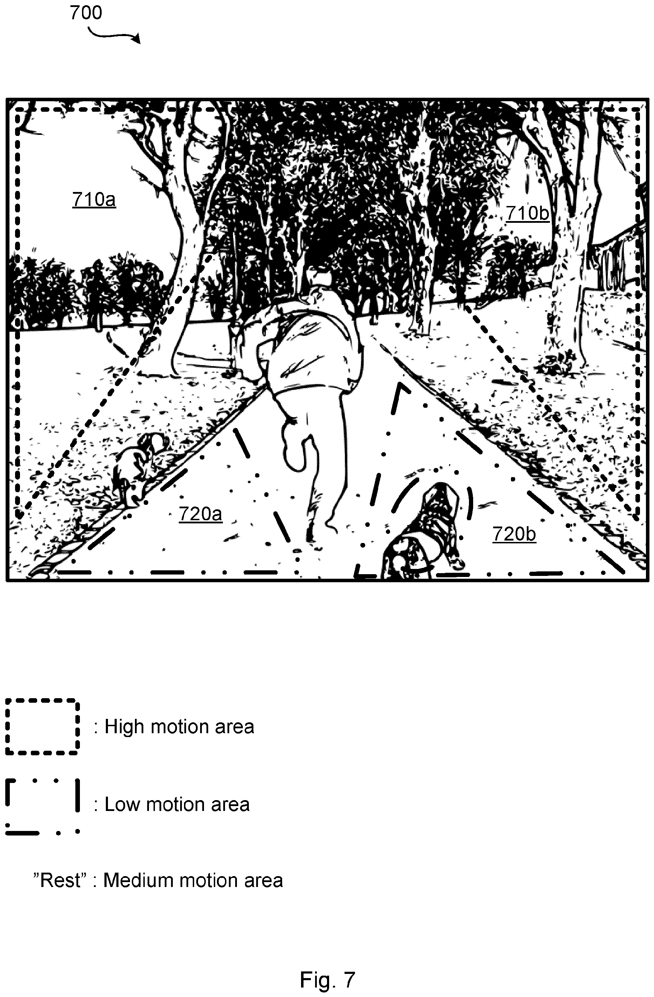

**Fig. 1** is a schematic diagram illustrating a scenario where an image processing device 110 is used for capturing video sequences of a scene 120. Different examples of scenes 120 will be provided below with reference to Figs. 6 and 7. The image processing device 110 comprises a camera device 112. The camera device 112 is configured to capture video sequences composed of image frames. In some examples the camera device 112 is a digital camera device and/or capable of pan, tilt and zoom (PTZ) and can thus be regarded as a (digital) PTZ camera device. Further, the image processing device 110 is configured to encode the image frames such that the video sequence can be decoded using any known video coding standard, such as any of: High Efficiency Video Coding (HEVC), also known as H.265 and MPEG-H Part 2; Advanced Video Coding (AVC), also known as H.264 and MPEG-4 Part 20; Versatile Video Coding (WC), also known as H.266, MPEG-I Part 3 and Future Video Coding (FVC); VP9, VP10 and AOMedia Video 2 (AV1), just to give some examples. In this respect, the encoding might be performed either directly in conjunction with the camera device 112 capturing the image frames or at another entity, such as in a dedicated image encoder 114, and then, at least temporarily, stored in a database 116, for later retrieval, decoding, and viewing.

An example of a video sequence 200 is illustrated in **Fig. 2****.** The video sequence 200 is composed of image frames. For illustrative purposes, only two image frames 210a, 210b are explicitly identified in Fig. 2. In turn, each image frame is composed of pixels blocks. Each pixel block 220a depicts a respective part of the scene 120. In general term, each pixel block is composed of a number of pixels, with preferably more than one pixel per pixel block. Further, the pixel blocks may have various shapes. Still further, not all pixel blocks need to be of the same shape and/or size. However, no pixel block is overlapping with another pixel block. Still further, neither the shape nor the size of the pixel blocks changes over time. In the example of Fig 2. and only pixels blocks 220a, 220b, 220a' are illustrated, where pixel blocks 220a, 220a' belong to image frame 210a, and pixel block 220b belongs to image frame 210b.

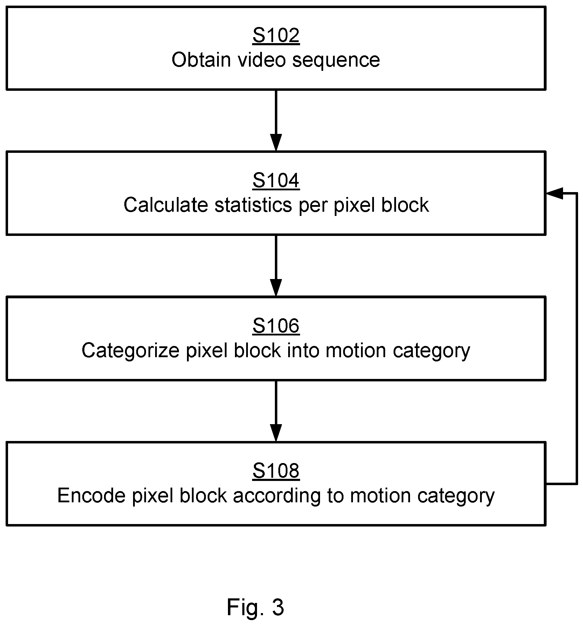

**Fig. 3** is a flowchart illustrating embodiments of methods for encoding pixel blocks 220a of a video sequence 200. The methods are performed by the image processing device 110. The methods are advantageously provided as computer programs 1020.

The methods are based on calculating statistics per pixel block 220a, categorizing each pixel block 220a according to changes in the statistics (e.g., in terms of trends in pixel intensity variations per pixel block), and encoding pixel blocks 220a in different categories with different compression rates, where pixel blocks 220a that vary a lot over time get a comparatively high compression rate.

S102: The image processing device 110 obtains a video sequence 200. The video sequence 200 is composed of a sequence of image frames 210a, 210b. Each of the image frames 210a, 210b is composed of pixels blocks 220a, 220b.

Steps S104, S106, and S108 are performed for each of the image frames 210a, 210b in the video sequence 200.

S104: The image processing device 110 calculates statistics per pixel block 220a. The statistics pertain to the amount of motion per pixel block 220a over time. Examples of such statistics will be disclosed below. The amount of motion is calculated based on a block difference determined per pixel block 220a over time. The block difference thus provides an indication of how much the pixel values per pixel block 220a change over time. Different examples of how the block difference can be calculated will be provided below.

S106: The image processing device 110 categorizes the pixel block 220a into three different motion categories based on their statistics. Examples of how the categorization can be performed as well as examples of the three different motion categories will be provided below.

S108: The image processing device 110 encodes each of the pixel blocks 220a with a compression rate. The compression rate for a given pixel block 220a depends on which motion category this given pixel block 220a belongs. At least the pixel blocks 220a in the motion category representing highest amount of motion per pixel block 220a over time are encoded with highest compression rate, or at least with a compression rate that is higher for the motion category representing a moderate amount of motion per pixel block 220a over time. Further properties of different compression rates that can be used will be disclosed below.

The higher the compression rate for a given pixel block is, the more this given pixel block is compressed.

In this way, image blocks associated with high (repetitive) motion will get suppressed (by being subjected to encoding with a high compression rate) whilst other pixel blocks can be encoded as usual, thus preserving details or finer motion.

Embodiments relating to further details of encoding pixel blocks 220a of a video sequence 200 as performed by the image processing device 110 will now be disclosed with continued reference to Figs. 1, 2, and 3.

Aspects of how the three different motion categories can be defined will be disclosed next.

As disclosed above, in step S104, the image processing device 110 categorizes the pixel block 220a into three different motion categories based on their statistics. In general terms, the three different motion categories can be defined, or separated from each other, by means of thresholds. For example, in some embodiments, according to the three different motion categories, the pixel blocks 220a for which the amount of motion is below a first threshold value belong to a first motion category. Further, the pixel blocks 220a for which the amount of motion is between the first threshold value and a second threshold value belong to a second motion category. Finally, the pixel blocks 220a for which the amount of motion is above the second threshold value belong to a third motion category. Hence, the first motion category represents pixel blocks with lowest amount of motion, the second motion category represents pixel blocks with medium amount of motion, and the third motion category represents pixel blocks with highest amount of motion.

Further, in addition to taking the amount of per pixel block into account, the compression rate for a given pixel block can also depend on the amount of motion in a neighboring pixel block. Thus, taking pixel block 220a as an example, the compression rate for pixel block 220a may then not only depend on the amount of motion for pixel block 220a but also the amount of motion for the neighboring pixel block 220a'. That is, in some embodiments, the pixel blocks 220a further are encoded with different compression rates depending on the amount of motion between spatially neighboring pixel blocks 220a'. Then, also a pixel block 220a having at least one neighboring pixel block 220a' with a high amount of motion can be included in the third motion category. That is, in some embodiments, the pixel blocks 220a for which the amount of motion is above a third threshold value and that have at least one spatially neighboring pixel block 220a' for which the amount of motion is above the second threshold value belong to the third motion category. This third threshold value is larger than the first threshold value but smaller than the second threshold value.

In one example, the history of the block intensity values is kept for a couple (or even a plurality) of image frames. In this way, the correlation between the current pixel block and its neighboring pixel blocks can be taken into account. If a given pixel block has neighbors which have high motion, those neighboring pixel blocks should only contribute to increasing the compression rate of the given pixel block if they are correlated, given the history. Even though the given pixel block has neighbors with a lot of motion, this makes it possible to make observations from past values that the given pixel block typically does not behave similarly to any neighboring pixel blocks, and that the given pixel block therefore should not be compressed at a higher compression rate because of those neighboring pixel blocks.

Aspects of how the different motion categories can be associated with compression rates will be disclosed next. It is here assumed that there are at least two different compression rates, referred to as a lowest compression rate and a highest compression rate, where, as indicated, the highest compression rate is higher than the lowest compression rate. In some embodiments, the lowest compression rate is used only for encoding pixel blocks 220a belonging to the second motion category (i.e., for pixel blocks with medium amount of motion). Further, the highest compression rate is used for encoding pixel blocks 220a belonging to the third motion category (i.e., for pixel blocks with high amount of motion). Further, a compression rate higher than the lowest compression rate is used for encoding pixel blocks 220a belonging to the first motion category (i.e., for pixel blocks with low amount of motion).

Generally, each of the lowest compression rate and the highest compression rate could include a set of different compression rates, where the set of lowest compression rates comprise compression rates that are lower than the compression rates in the set of highest compression rates. That is, the highest compression rate can be split into multiple compression rate to yield multiple levels of high compression, etc.

Aspects of how the amount of motion per pixel block can be calculated will be disclosed next.

According to a first example, the amount of motion per pixel block 220a over time is calculated based on the change in pixel block intensity over time. In particular, in some embodiments, the amount of motion per pixel block 220a is based on a change in pixel block intensity over time. The change can either be absolute or refer to the rate of change. In some examples, the block intensity values are saved for a number of image frames before the current image frame, and the temporal frequency spectrum of the block intensity is computed from the saved history. The metric can then be based on the power spectral density of frequencies above some threshold.

According to a second example, the amount of motion per pixel block 220a over time is calculated based on an accumulated difference per pixel block between image frames. In particular, in some embodiments, the pixel block intensity is defined by an accumulated pixel intensity per pixel block 220a.

According to a third example, the amount of motion per pixel block 220a over time is calculated based on the absolute difference of accumulated pixel values per block. In particular, in some embodiments, the accumulated block difference for a given pixel block 220a is determined by first calculating the block intensity for a given pixel block 220a for the current image frame and for the previous image frame (i.e., calculating a first block intensity for the given pixel block 220a for a current image frame 210a and a second block intensity for the given pixel block 220a for a previous image frame 210b), and then calculating the absolute difference between these two block intensities (i.e., calculating an absolute difference between the first block intensity and the second block intensity). Alternatively, the accumulated block difference for a given pixel block 220a can be determined as an accumulation of absolute differences of a given pixel block 220a from one image frame 210a to a previous image frame 210b in the sequence of image frames 210a, 210b.

According to a fourth example, the amount of motion per pixel block 220a over time is calculated based on a weighted average. In particular, in some embodiments, the accumulated block difference is a weighted average of accumulated block differences calculated over at least three image frames 210a, 210b.

According to a fifth example, when calculating the amount of motion per pixel block 220a over time, a shorter rolling average is used for the lower threshold and a longer rolling average is used for the higher threshold. In particular, in some embodiments, a first weighted average of the accumulated block differences is calculated for comparing the pixel blocks 220a to the first threshold value and a second weighted average of the accumulated block differences is calculated for comparing the pixel blocks 220a to the second threshold value, wherein the second weighted average is calculated over more image frames 210a, 210b than the first weighted average.

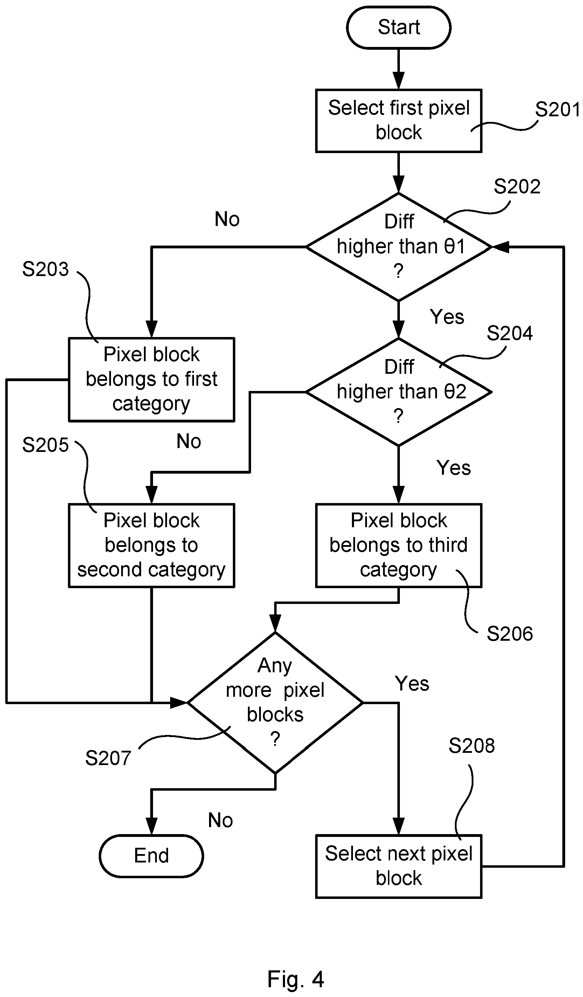

Reference is next made to **Fig. 4** in which is provided a flowchart of a method for categorizing pixel blocks per image frame according to an embodiment. The input to the method is the pixel blocks of one image frame, where each pixel block has a difference of accumulated pixel values with respect to the same pixel block in a previous image frame, as well as two thresholds θ1 and θ2, where 0< θ1 < θ2. The output from the method is a list of categorized pixel blocks for the image frame.

S201: A first pixel block is selected in the image frame.

S202: A check is made whether the pixel block has difference higher than θ1 compared to the same pixel block in the previous image frame or not. If no, then the pixel block is labeled as belonging to the first category (step S203), and then step S207 is entered. If yes, then step S204 is entered.

S204: A check is made whether the pixel block has difference higher than θ2, or it has any neighbor pixel block with a difference higher than θ2 or not. If no, then the pixel block is labeled as belonging to the second category (step S205), and then step S207 is entered. If yes, then the pixel block is labeled as belonging to the third category (step S206), and step S207 is entered.

S207: A check is made whether there are any more pixel blocks in the image frame. If yes, then step S208 is entered. If no, all pixel blocks have been categorized and the procedure is ended.

S208: The next pixel block is selected and step S202 is entered for the thus selected pixel block.

It is noted that this flowchart is just one example of how the pixel blocks can be categorized.

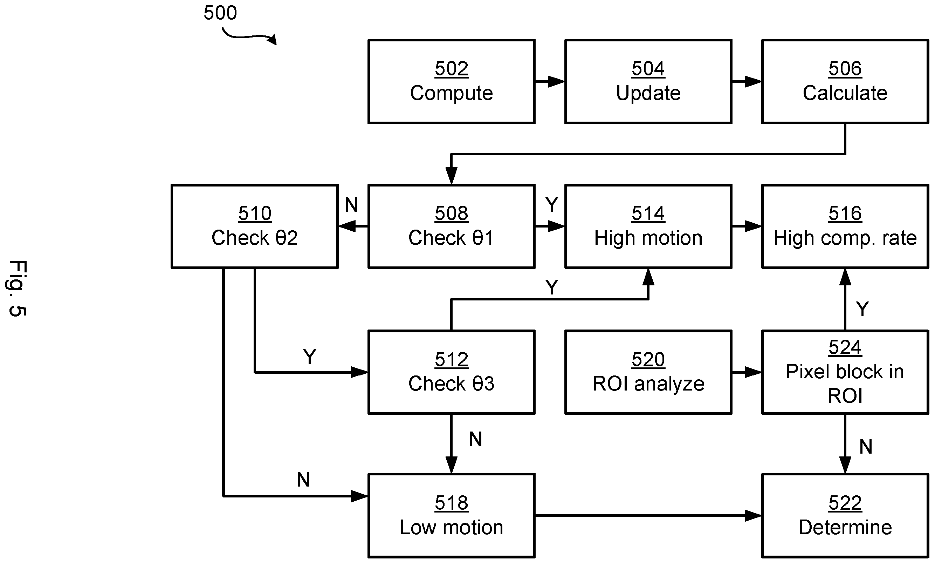

A block diagram of an image processing device configured to perform methods as herein disclosed is provided in **Fig. 5**. The block diagram 500 is executed per pixel block in each image frame of a video sequence. In a compute block 502 the pixel block intensity is computed for the pixel block. In an update block 504, the history (with respect to pixel intensity) for the pixel block is updated based on the computed pixel block intensity. In a calculate block 506, a measure is calculated based on the computed pixel block intensity and the updated history. In a check θ1 block 508 it is checked whether the measure for the pixel block is higher than some first threshold θ1 or not. In a check θ2 block 510 it is checked whether the measure for the pixel block is higher than some second threshold θ2 or not. In a check θ3 block 512 it is checked whether the measure for any neighbor pixel block of the pixel block is higher than some third threshold θ3 or not. In a high motion category block 514 the pixel block is categorized as being a pixel block with high amount of motion. In a high compression rate block 516 the pixel block is encoded at a high compression rate. In a low motion category block 518 the pixel block is categorized as being a pixel block without any high amount of motion. In an ROI analyze block 520 the pixel block is analyzed with a ROI detector. In a determine block 522 some auxiliary detector is used to determine the compression rate for the pixel block. In a pixel block in ROI block 524 it is checked whether the pixel block is within a ROI or not. If yes, the high compression rate block 516 is entered (thus forcing a high compression rate due to a high amount of movement in this pixel block). If no, the determine block 522 is entered.

As disclosed above, there could be different types of scenes 120. Two illustrative examples of typical scenes where the herein disclosed embodiments are applicable will be discussed next with respect to Figs. 6 and 7.

In **Fig. 6** is provided an example where the scene 120 represents a vehicle interior 600. The vehicle interior could be of a passenger car, such as a taxi, emergency vehicle, or of a public transport vehicle, such as a bus or train, etc. where filming of the vehicle interior is required for security purposes. As the vehicle start travelling, the amount of motion in the image blocks representing the windows will increase and become high. According to the herein disclosed embodiments, these pixel blocks will therefore be encoded using a high compression rate, as indicated by reference numerals 610a, 610b, 610c (corresponding to the side windows and the back window of the vehicle). Likewise, the amount of motion would typically stay low in areas of the image frame not occupied by any vehicle occupant (such as driver or passenger) or where the vehicle occupant stays very still. One typical area not occupied by any vehicle occupant is indicated by reference numeral 620. A medium amount of motion can typically be observed for areas of the image frame occupied by a vehicle occupant. In this way, the total bit rate for encoding the video sequence can be low by using a low compression rate (i.e., keeping a high quality) only for the pixel blocks at the areas where the vehicle occupants are located. However, contrary to technologies using masking of fixed areas, the herein disclosed embodiments allow for the categorization of a pixel block to change over time.

In **Fig. 7** is provided an example where the scene 120 represents a body camera view 700. The body camera could be worn by a private person or by security personnel, such as a police officer, firefighter, military personnel, etc. In Fig. 7 is represented a typical scenario where the person wearing the body camera is running after another person on a pathway surrounded by an environment. As the person wearing the body camera is running, there will be a high amount of motion with respect to changes in the environment on the sides. These pixel blocks will therefore be encoded using a high compression rate, as indicated by reference numerals 710a, 710b. A medium amount of motions can typically be observed for areas of the image frame occupied by the person running in front, as well as for the areas where two dogs are running. However, the amount of motion could stay low in areas of the image corresponding to the pathway, depending on the texture of the pathway, as identified by reference numerals 720a, 720b. Alternatively, a medium amount of motion can also be observed in these areas. In this way, the total bit rate for encoding the video sequence can be low by using a low compression rate (i.e., keeping a high quality) only for the pixel blocks at the areas where the running person and the dogs are located.

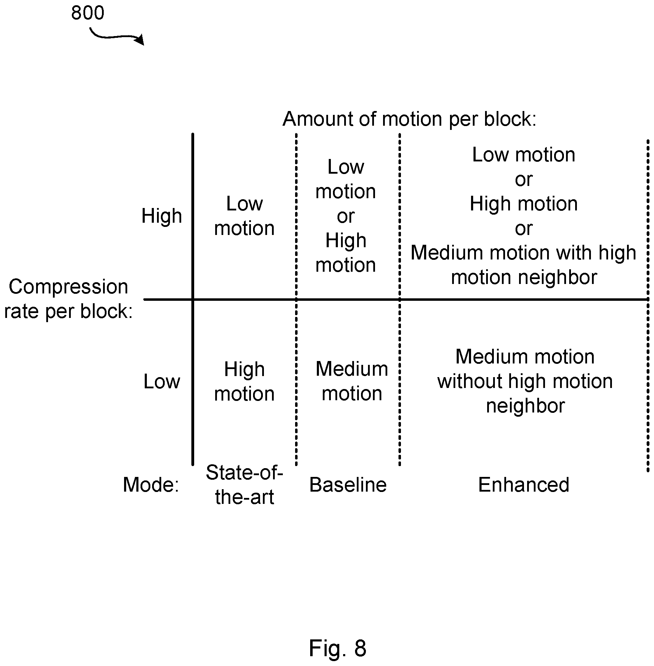

In **Fig. 8** is provided a comparison of different alternatives (or modes) for selecting the compression rate per pixel block as a function of the amount of motion per pixel block. According to state-of-the-art, a low compression rate is used for a pixel block with a high amount of motion, whereas a high compression rate is used for a pixel block with a low amount motion. According to a first embodiments (denoted "baseline" in the figure) of the present disclosure, a low compression rate is used for a pixel block with a medium amount of motion, whereas a high compression rate is used for a pixel block with either a low amount motion or a high amount of motion. According to a second embodiments (denoted "enhanced" in the figure) of the present disclosure, a low compression rate is used for a pixel block having a medium amount of motion and being without any neighbor pixel block having a high amount of motion, whereas a high compression rate is used for all other pixel blocks (i.e., pixel block with either a low amount motion or a high amount of motion or a medium amount of motion but with a neighbor pixel block with a high amount of motion. Thus, compared to the first embodiment, the second embodiment also takes into account the amount of motion in neighboring pixel blocks when selecting the compression rate for a given pixel block.

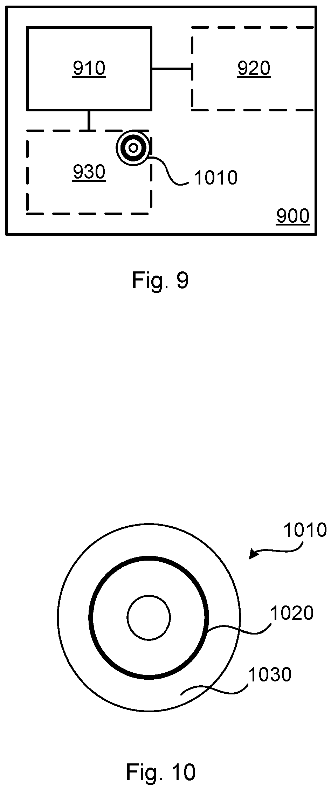

**Fig. 9** schematically illustrates, in terms of a number of structural units, the components of an image processing device 900 according to an embodiment. Processing circuitry 910 is provided using any combination of one or more of a suitable central processing unit (CPU), multiprocessor, microcontroller, digital signal processor (DSP), etc., capable of executing software instructions stored in a computer program product 1010 (as in Fig. 10), e.g. in the form of a storage medium 930. The processing circuitry 910 may further be provided as at least one application specific integrated circuit (ASIC), or field programmable gate array (FPGA).

Particularly, the processing circuitry 910 is configured to cause the image processing device 900 to perform a set of operations, or steps, as disclosed above. For example, the storage medium 930 may store the set of operations, and the processing circuitry 910 may be configured to retrieve the set of operations from the storage medium 930 to cause the image processing device 900 to perform the set of operations. The set of operations may be provided as a set of executable instructions.

Thus the processing circuitry 910 is thereby arranged to execute methods as herein disclosed. The storage medium 930 may also comprise persistent storage, which, for example, can be any single one or combination of magnetic memory, optical memory, solid state memory or even remotely mounted memory. The image processing device 900 may further comprise a communications (comm.) interface 920 at least configured for communications with other entities, functions, nodes, and devices. As such the communications interface 920 may comprise one or more transmitters and receivers, comprising analogue and digital components. The processing circuitry 910 controls the general operation of the image processing device 900 e.g. by sending data and control signals to the communications interface 920 and the storage medium 930, by receiving data and reports from the communications interface 920, and by retrieving data and instructions from the storage medium 930. Other components, as well as the related functionality, of the image processing device 900 are omitted in order not to obscure the concepts presented herein.

The image processing device 110, 900 may be provided as a standalone device or as a part of at least one further device. Thus, a first portion of the instructions performed by the image processing device 110, 900 may be executed in a first device, and a second portion of the of the instructions performed by the image processing device 110, 900 may be executed in a second device; the herein disclosed embodiments are not limited to any particular number of devices on which the instructions performed by the image processing device 110, 900 may be executed. Hence, the methods according to the herein disclosed embodiments are suitable to be performed by an image processing device 110, 900 residing in a cloud computational environment. Therefore, although a single processing circuitry 910 is illustrated in Fig. 9 the processing circuitry 910 may be distributed among a plurality of devices, or nodes. The same applies to the computer program 1020 of Fig. 10.

**Fig. 10** shows one example of a computer program product 1010 comprising computer readable storage medium 1030. On this computer readable storage medium 1030, a computer program 1020 can be stored, which computer program 1020 can cause the processing circuitry 910 and thereto operatively coupled entities and devices, such as the communications interface 920 and the storage medium 930, to execute methods according to embodiments described herein. The computer program 1020 and/or computer program product 1010 may thus provide means for performing any steps as herein disclosed.

In the example of Fig. 10, the computer program product 1010 is illustrated as an optical disc, such as a CD (compact disc) or a DVD (digital versatile disc) or a Blu-Ray disc. The computer program product 1010 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1020 is here schematically shown as a track on the depicted optical disk, the computer program 1020 can be stored in any way which is suitable for the computer program product 1010.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for encoding pixel blocks (220a) of a video sequence (200), wherein the method is performed by an image processing device (no, 900), and wherein the method comprises:
obtaining (S102) a video sequence (200) composed of a sequence of image frames (210a, 210b), wherein each of the image frames (210a, 210b) is composed of pixels blocks (220a, 220b); and wherein the method for each of the image frames (210a, 210b) further comprises:
calculating (S104) statistics per pixel block (220a), the statistics pertaining to amount of motion per pixel block (220a) over time, wherein the amount of motion is calculated based on a block difference determined per pixel block (220a) over time;
categorizing (S106) the pixel block (220a) into three different motion categories based on their statistics; and
encoding (S108) each of the pixel blocks (220a) with a compression rate that depends on which motion category each of the pixel blocks (220a) belongs, wherein at least the pixel blocks (220a) in the motion category representing highest amount of motion per pixel block (220a) over time are encoded with highest compression rate.

2. The method according to claim 1, wherein according to the three different motion categories, the pixel blocks (220a) for which the amount of motion is below a first threshold value belong to a first motion category, the pixel blocks (220a) for which the amount of motion is between the first threshold value and a second threshold value belong to a second motion category, and the pixel blocks (220a) for which the amount of motion is above the second threshold value belong to a third motion category.

3. The method according to claim 1, wherein the pixel blocks (220a) further are encoded with different compression rates depending on the amount of motion between spatially neighboring pixel blocks (220a, 220a').

4. The method according to claim 2 and 3, wherein the pixel blocks (220a) for which the amount of motion is above a third threshold value and that have at least one spatially neighboring pixel block (220a') for which the amount of motion is above the second threshold value belong to the third motion category.

5. The method according to claim 2 or 4, wherein a lowest compression rate is used only for encoding pixel blocks (220a) belonging to the second motion category.

6. The method according to any of claims 2 to 5, wherein the highest compression rate is used for encoding pixel blocks (220a) belonging to the third motion category.

7. The method according to claim 5 or 6, wherein a compression rate higher than the lowest compression rate is used for encoding pixel blocks (220a) belonging to the first motion category.

8. The method according to any preceding claim, wherein the amount of motion per pixel block (220a) is based on a change in pixel block intensity over time.

9. The method according to claim 8, wherein the pixel block intensity is defined by an accumulated pixel intensity per pixel block (220a).

10. The method according to claim 9, wherein the accumulated block difference for a given pixel block (220a) is determined by calculating a first block intensity for the given pixel block (220a) for a current image frame (210a) and a second block intensity for the given pixel block (220a) for a previous image frame (210b), and calculating an absolute difference between the first block intensity and the second block intensity.

11. The method according to claim 10, wherein the accumulated block difference is a weighted average of accumulated block differences calculated over at least three image frames (210a, 210b).

12. The method according to claim 11, wherein a first weighted average of the accumulated block differences is calculated for comparing the pixel blocks (220a) to the first threshold value and a second weighted average of the accumulated block differences is calculated for comparing the pixel blocks (220a) to the second threshold value, wherein the second weighted average is calculated over more image frames (210a, 210b) than the first weighted average.

13. The method according to any preceding claim, wherein each pixel block (220a) depicts a respective part of a scene (120), and wherein the scene represents a vehicle interior (600) or a body camera view (700).

14. An image processing device (no, 900) for encoding pixel blocks (220a) of a video sequence (200), the image processing device (no, 900) comprising processing circuitry (910), the processing circuitry being configured to cause the image processing device (110, 900) to:
obtain a video sequence (200) composed of a sequence of image frames (210a, 210b), wherein each of the image frames (210a, 210b) is composed of pixels blocks (220a, 220b); and for each of the image frames (210a, 210b):
calculate statistics per pixel block (220a), the statistics pertaining to amount of motion per pixel block (220a) over time, wherein the amount of motion is calculated based on a block difference determined per pixel block (220a) over time;
categorize the pixel block (220a) into three different motion categories based on their statistics; and
encode each of the pixel blocks (220a) with a compression rate that depends on which motion category each of the pixel blocks (220a) belongs, wherein at least the pixel blocks (220a) in the motion category representing highest amount of motion per pixel block (220a) over time are encoded with highest compression rate.

15. A computer program (1020) for encoding pixel blocks (220a) of a video sequence (200), the computer program comprising computer code which, when run on processing circuitry (910) of an image processing device (no, 900), causes the image processing device (no, 900) to:
obtain (S102) a video sequence (200) composed of a sequence of image frames (210a, 210b), wherein each of the image frames (210a, 210b) is composed of pixels blocks (220a, 220b); and for each of the image frames (210a, 210b):
calculate (S104) statistics per pixel block (220a), the statistics pertaining to amount of motion per pixel block (220a) over time, wherein the amount of motion is calculated based on a block difference determined per pixel block (220a) over time;
categorize (S106) the pixel block (220a) into three different motion categories based on their statistics; and
encode (S108) each of the pixel blocks (220a) with a compression rate that depends on which motion category each of the pixel blocks (220a) belongs, wherein at least the pixel blocks (220a) in the motion category representing highest amount of motion per pixel block (220a) over time are encoded with highest compression rate.
